# EUROPÄISCHE PATENTSCHRIFT

(11) **EP 1 525 588 B1**
(45) Veröffentlichungstag und Bekanntmachung des Hinweises auf die Patenterteilung: **31.05.2006**
(21) Anmeldenummer: 03732160.1
(22) Anmeldetag: 07.07.2003
(51) Int. Cl.: G21C 19/307, G21C 17/022

(54) **VERFAHREN ZUM BETRIEB EINES KERNKRAFTWERKES SOWIE VORRICHTUNG ZUR DURCHFÜHRUNG DES VERFAHRENS**
METHOD FOR OPERATING A NUCLEAR POWER STATION AND DEVICE FOR CARRYING OUT SAID METHOD
PROCEDE POUR FAIRE FONCTIONNER UNE CENTRALE NUCLEAIRE ET DISPOSITIF POUR LA MISE EN OEUVRE DUDIT PROCEDE

(30) Priorität: 26.07.2002 CH 131602
(43) Veröffentlichungstag der Anmeldung: 27.04.2005
(73) Patentinhaber: Alstom Technology Ltd, 5400 Baden (CH)
(72) Erfinder: WOLF, Hartwig, CH-5408 Ennetbaden (CH)
(86) Internationale Anmeldenummer: PCT/CH2003/000442
(87) Internationale Veröffentlichungsnummer: WO 2004/012205

(56) Entgegenhaltungen:
- DE-C- 19 810 963
- ES-A- 2 021 902
- JP-A- 62 150 198
- US-A- 3 975 170
- PATENT ABSTRACTS OF JAPAN vol. 001, no. 062 (M-022), 17. Juni 1977 (1977-06-17) & JP 52 011397 A (TOSHIBA CORP;OTHERS: 01), 28. Januar 1977 (1977-01-28) & DATABASE WPI Week 197710 Derwent Publications Ltd., London, GB; AN 17436Y

## Beschreibung

### TECHNISCHES GEBIET

Die vorliegende Erfindung bezieht sich auf das Gebiet der Technik von Kernkraftwerken. Sie betrifft ein Verfahren zum Betrieb eines Kernkraftwerkes gemäss dem Oberbegriff des Anspruchs 1 sowie eine Vorrichtung zur Durchführung des Verfahrens.

Ein Verfahren der eingangs genannten Art ist z.B. aus dem Artikel von W. Blaser et al., Wasserstoffeinspeiseversuche in Kernkraftwerken, Teil 1: Kernkraftwerk Leibstadt, VGB KraftwerksTechnik, 1/98, S.82-86 (1998), bekannt.

### STAND DER TECHNIK

Siedewasserreaktoren werden mit hochreinem Wasser als Moderator und Kühlmittel betrieben. Als Resultat der Wasserradiolyse im Strahlenfeld des Reaktorkerns enthält der dort erzeugte Dampf Zersetzungsprodukte, vorwiegend Wasserstoff (H₂) und Sauerstoff. Der Entspannung des Dampfes in der Turbogruppe folgt die Kondensation, wobei in den Kraftwerkskondensatoren neben der Phasenumwandlung des Dampfes eine Absaugung der nichtkondensierbaren Gase stattfindet. Die am Kondensator abgesaugten Radiolysegase werden in der Regel mittels eines H₂-Rekombinators zu Wasser katalytisch nachverbrannt.

In den vergangenen Jahren wurden mehrfach Untersuchungen durchgeführt, bei denen in das Speisewasser eines Siedewasserreaktors kontinuierlich Wasserstoff zudosiert wurde (siehe dazu den eingangs genannten Artikel von W. Blaser et al.). Damit lässt sich im Bereich des Reaktors eine Absenkung des elektrochemischen Potentials und dadurch ein wirksamer Schutz des Reaktors gegen interkristalline Spannungsrisskorrosion aufbauen. Ebenfalls wird die Zersetzungsrate von Wasser zu Radiolysegasen deutlich reduziert, was wiederum den Anteil der Inertgase im Frischdampf reduziert und zu einer Steigerung der Kondensatorleistung führt.

Nachteilig ist bei dieser Art der Wasserstoffzugabe, dass einerseits der in den Radiolysegasen vorhandene Wasserstoff aufwendig entsorgt werden muss, während andererseits neuer Wasserstoff für die Zugabe zum Speisewasser bereitgestellt werden muss.

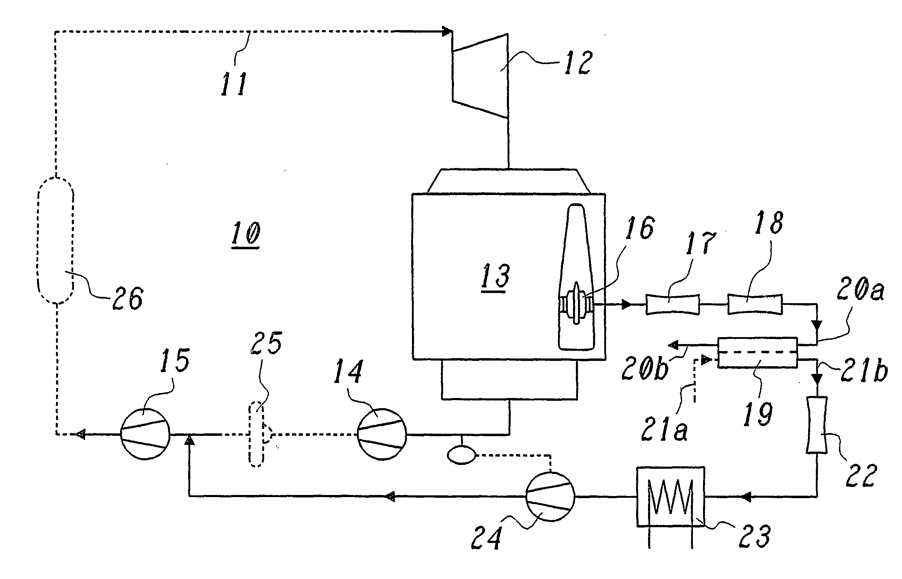

Es ist bereits in der US-A-3,975,170 vorgeschlagen worden, den Wasserstoffgehalt im normalen Kühlkreislauf eines Druckwasserreaktors mittels einer Diffusionszelle (62 in Fig. 2) zu regeln, die durch eine wasserstoffdurchlässige Membran in zwei Kammern unterteilt ist. Der dafür benötigte Wasserstoff wird in einer ebenfalls mit einer Membran versehenen Wasserstofftrennzelle (40 in Fig. 2) einem vom Kühlwasserstrom abgezweigten Teilstrom entnommen. Demselben Teilstrom wird ein geregelter Anteil an Wasserstoff in der Diffusionszelle wieder zugesetzt, bevor der Teilstrom mit dem Kühlwasserstrom wieder vereinigt wird.

Eine Lösung für den Siedewasserreaktor mit seinem Wasser-Dampf-Kreislauf ist daraus nicht zu entnehmen.

Lösungen für einen Siedewasserreaktor sind in der JP-52011397 und der JP-62150198 offenbart, haben jedoch bei der Gewinnung des Wasserstoffs Schwächen.

### DARSTELLUNG DER ERFINDUNG

Es ist Aufgabe der Erfindung, ein Verfahren zum Betrieb eines Siedewasserreaktors anzugeben, welches sich durch eine erhöhte Sicherheit auszeichnet und zu Kosteneinsparungen führt, sowie eine Vorrichtung zur Durchführung des Verfahrens anzugeben.

Die Aufgabe wird durch die Gesamtheit der Merkmale der Ansprüche 1 und 97 gelöst. Der Kern der Erfindung besteht darin, zumindest ein Teil des dem Speisewasser zugesetzten Wasserstoffs aus in dem Reaktor erzeugten nichtkondensierbaren Gasen zu gewinnen und damit in den Wasser-Dampf-Kreislauf zurückzuführen, wobei die nichtkondensierbaren Gase am Kondensator abgesaugt werden, aus den abgesaugten nichtkondensierbaren Gasen Wasserstoff absepariert wird, der abseparierte Wasserstoff verdichtet und der verdichtete Wasserstoff nach der Kondensatpumpe in den Wasser-Dampf-Kreislauf injiziert wird und die nichtkondensierbaren Gase im Kondensator vor dem Absaugen aufkonzentriert werden.

Aus dem Gasgemisch aus nichtkondensierbaren Gasen lässt sich der Wasserstoff besonders einfach separieren, wenn gemäss einer bevorzugten Weiterbildung der Erfindung die nichtkondensierbaren Gase durch ein mit selektiv wasserstoffdurchlässigen Membranen bestücktes Separationsmodul geleitet werden, und der Wasserstoff aus dem Permeat des Separationsmoduls gewonnen wird. Vorzugsweise werden die nichtkondensierbaren Gase vor dem Eintritt in das Separationsmodul verdichtet.

Die Wasserstoffseparation wird dabei dadurch verbessert, dass das vorwiegend aus Wasserstoff und Wasserdampf bestehende Permeat aus dem Separationsmodul abgesaugt und auf einen höheren Druck gebracht, dass nach der Druckerhöhung aus dem Permeat Wasserdampf abgeschieden, und dass der übrigbleibende Wasserstoff dann der Verdichtung zugeführt wird.

Eine bevorzugte Ausgestaltung der erfindungsgemässen Vorrichtung ist dadurch gekennzeichnet, dass die Abseparierungsmittel ein mit selektiv wasserstoffdurchlässigen Membranen bestücktes Separationsmodul umfassen, dass zwischen dem ersten Eingang des Separationsmoduls und dem Kondensator erste Saugeinrichtungen, insbesondere in Form von Dampfstrahlsaugern, angeordnet sind, dass zwischen dem ersten Ausgang des Separationsmoduls und dem Wasser-Dampf-Kreislauf eine zweite Saugeinrichtung, insbesondere in Form eines Dampfstrahlsaugers, angeordnet ist, dass zwischen der zweiten Saugeinrichtung und dem Wasser-Dampf-Kreislauf ein Verdichter angeordnet ist, dass zwischen der zweiten Saugeinrichtung und dem Verdichter ein Zwischenkondensator angeordnet ist.

Weitere Ausführungsformen ergeben sich aus den abhängigen Ansprüchen.

### KURZE ERLÄUTERUNG DER FIGUR

Die Erfindung soll nachfolgend anhand eines Ausführungsbeispiels im Zusammenhang mit der Zeichnung näher erläutert werden. Die einzige Figur zeigt ein stark vereinfachtes Blockschaltbild eines Kernkraftwerkes gemäss einem bevorzugten Ausführungsbeispiel der Erfindung.

### WEGE ZUR AUSFÜHRUNG DER ERFINDUNG

In der Figur ist ein stark vereinfachtes Blockschaltbild eines Kernkraftwerkes gemäss einem bevorzugten Ausführungsbeispiel der Erfindung wiedergegeben. Das Kernkraftwerk 10 hat einen Wasser-Dampf-Kreislauf 11, von dem nur ausgewählte Teile, die zur Erläuterung der Erfindung wesentlich sind, in der Figur dargestellt und mit Bezugszeichen versehen sind. Im Wasser-Dampf-Kreislauf 11 befindet sich ein Reaktor 26, der als Siedewasserreaktor ausgebildet ist. In dem Reaktor 26 wird Wasser durch die in den Brennstäben ablaufende Kernprozesse erhitzt und fortlaufend in Dampf umgewandelt, der dann an eine Turbogruppe abgegeben wird, von der nur die Niederdruckturbine 12 gezeigt ist. In der Niederdruckturbine 12 - wie auch in den vorgeschalteten Hoch- und Mitteldruckturbinen - wird der Dampf unter Arbeitsleistung entspannt und gelangt dann in einen Kondensator 13, wo er durch Abkühlung kondensiert. Das im Kondensator 13 anfallende Kondensat wird mit einer Kondensatpumpe 14 in einen Speisewasserbehälter 25 gepumpt und von dort mittels einer Speisewasserpumpe 15 wieder dem Reaktor 26 zugeführt. Damit ergibt sich ein geschlossener Wasser-Dampf-Kreislauf. Weitere Elemente des Kreislaufs wie Vorwärmer, Zwischenerhitzer etc. sind der Einfachheit halber nicht gezeigt.

Wie bereits eingangs erwähnt, enthält aufgrund der Wasserradiolyse im Strahlenfeld des Reaktorkerns der im Reaktor 26 erzeugte Dampf Zersetzungsprodukte in Form von nichtkondensierbaren Gasen, vorwiegend Wasserstoff (H₂) und Sauerstoff. In dem Kondensator 13 eines Siedewasser-Kraftwerkes werden nun die nichtkondensierbaren Gase über Luftkühler 16, die in die Kondensatorrohrbündel integriert sind, aufkonzentriert und durch einen ersten Dampfstrahlsauger 17 abgesaugt. Das Gasgemisch wir danach verdichtet, z.B. mittels eines zweiten Dampfstrahlsaugers 18. Während üblicherweise im Stand der Technik nun eine katalytische Nachverbrennung der Radiolysegase in einem Rekombinator erfolgt, bevor die Abgase über eine Aufbereitungsstrecke an die Umgebung freigesetzt werden, sieht die Erfindung vor, die abgesaugten Gase nach der Verdichtung, d.h., nach Verlassen des zweiten Dampfstrahlsaugers 18, in den ersten Eingang 20a eines Separationsmoduls 19 zu leiten. Das Separationsmodul 19 kann z.B. spezielle Membranen zur Gaspermeation enthalten, die eine hohe Selektivität bezüglich des Gases Wasserstoff aufweisen. Membranen mit den gewünschten Eigenschaften sind derzeit sowohl im technischen Einsatz (siehe dazu den Artikel von S. Hirata et al., Experimental and analytical study on membrane detritiation process, Fusion Technology, Vol. 28, S. 1521-1526 (October 1995), als auch in Entwicklung im Hinblick auf eine Steigerung der Selektivität und Langzeitstabilität.

Das am ersten Ausgang 20b abgegebene (von der Membran zurückgehaltene) Retentat aus dem Separationsmodul 19 setzt sich zusammen aus Stickstoff, Sauerstoff, Wasserdampf und einer geringen Menge Wasserstoff, das am zweiten Ausgang 21 b abgegebene (von der Membran durchgelassene) Permeat enthält vorwiegend Wasserstoff und Wasserdampf. Über einen zweiten Eingang 21 a kann bei Bedarf auf der Permeatseite der Membran Spüldampf in das Separationsmodul 19 eingeleitet werden. Das Permeat. wird mittels eines weiteren Dampfstrahlsaugers 22 auf einen höheren Druck gefördert. Mit Hilfe eines Zwischenkondensators 23 wird Wasserdampf abgeschieden. Ein nachgeschalteter Verdichter 24 komprimiert den Wasserstoff und erlaubt die Reinjektion/-zirkulation des rückgewonnenen Wasserstoffs in den Wasser-Dampf-Kreislauf 11 nach der Kondensatpumpe 14.

Folgende Vorteile resultieren aus der erfindungsgemässen Rückgewinnung und Rezirkulation von Wasserstoff in den Wasser-Dampf-Kreisprozess von Kernkraftwerken:
a) Infolge der kontinuierlichen Zudosierung/Rezirkulation von Wasserstoff:
   - Reduzierung der Gefahr der Interkristallinen Spannungsrisskorrosion,
   - Minderung der Zersetzungsrate und damit der Menge an produzierten Radiolysegasen.
      Sekundäreffekte: besseres Leistungsverhalten des Kondensators 13, potentielle Verkleinerung des Kondensatorentlüftungssystems.
b) Infolge der Rückgewinnungsanlage:
   - Kosteneinsparung im Hinblick auf den Zukauf von Wasserstoff bzw. auf eine erforderliche Wasserzerlegungsanlage,
   - Wegfall einer Sauerstoffzudosierung vor dem Rekombinator, um ein stöchiometrisches Verbrennungsgemisch zu erhalten,
   - deutliche Reduzierung der Grösse oder möglicherweise Wegfall des Rekombinators,
   - möglicherweise die Gewährleistung einer Prozessführung in der Art, dass die vorliegenden Gasgemische stets Wasserstoffkonzentrationen ausserhalb der Explosionsgrenzen aufweisen (Eliminierung der Gefahr von Verpuffungen),
   - Rezirkulation des Wasserstoffs im Strahlungsbereich und somit Minderung der Emissionen an die Umgebung.

### BEZUGSZEICHENLISTE

- 10: Kernkraftwerk
- 11: Wasser-Dampf-Kreislauf
- 12: Niederdruckturbine
- 13: Kondensator
- 14: Kondensatpumpe
- 15: Speisewasserpumpe
- 16: Luftkühler
- 17,18,22: Dampfstrahlsauger
- 19: Separationsmodul
- 20a,21a: Eingang (Separationsmodul)
- 20b,21b: Ausgang (Separationsmodul)
- 23: Zwischenkondensator
- 24: Verdichter
- 25: Speisewasserbehälter
- 26: Reaktor

## Patentansprüche

1. Verfahren zum Betrieb eines Kernkraftwerkes (10), in welchem in einem Wasser-Dampf-Kreislauf (11) Wasser in einem Reaktor (26) verdampft, der erzeugte Dampf in einer oder mehreren Dampfturbinen (12) entspannt, der entspannte Dampf in einem nachfolgenden Kondensator (13) kondensiert, das Kondensat mittels einer Kondensatpumpe (14) in einen Speisewasserbehälter (25) gepumpt und Speisewasser aus dem Speisewasserbehälter (25) mittels einer Speisewasserpumpe (15) zur Dampferzeugung zurück in den Reaktor (26) gepumpt wird, wobei dem Speisewasser zur Verringerung der Spannungsrisskorrosion Wasserstoff zugesetzt wird, zumindest ein Teil des dem Speisewasser zugesetzten Wasserstoffs aus in dem Reaktor (26) erzeugten nichtkondensierbaren Gasen gewonnen wird, die nichtkondensierbaren Gase am Kondensator (13) abgesaugt werden, aus den abgesaugten nichtkondensierbaren Gasen Wasserstoff absepariert wird, und der abseparierte Wasserstoff verdichtet und der verdichtete Wasserstoff nach der Kondensatpumpe (14) in den Wasser-Dampf-Kreislauf (11) injiziert wird, **dadurch gekennzeichnet, dass** die nichtkondensierbaren Gase im Kondensator (13) vor dem Absaugen aufkonzentriert werden.

2. Verfahren nach Anspruch 1, **dadurch gekennzeichnet, dass** die nichtkondensierbaren Gase durch ein mit selektiv wasserstoffdurchlässigen Membranen bestücktes Separationsmodul (19) geleitet werden, und dass der Wasserstoff aus dem Permeat des Separationsmoduls (19) gewonnen wird.

3. Verfahren nach Anspruch 2, **dadurch gekennzeichnet, dass** die nichtkondensierbaren Gase vor dem Eintritt in das Separationsmodul (19) verdichtet werden.

4. Verfahren nach Anspruch 2 oder 3, **dadurch gekennzeichnet, dass** das vorwiegend aus Wasserstoff und Wasserdampf bestehende Permeat aus dem Separationsmodul (19) abgesaugt und auf einen höheren Druck gebracht, dass nach der Druckerhöhung aus dem Permeat Wasserdampf abgeschieden, und dass der übrigbleibende Wasserstoff dann der Verdichtung zugeführt wird.

5. Verfahren nach Anspruch 4, **dadurch gekennzeichnet, dass** das Absaugen des Permeats unter Zusatz von Spüldampf erfolgt.

6. Verfahren nach einem der Ansprüche 2 bis 5, **dadurch gekennzeichnet, dass** das aus dem Separationsmodul (19) herauskommende Retentat aufbereitet wird.

7. Vorrichtung zur Durchführung des Verfahrens nach Anspruch 1, mit dem Wasser-Dampf-Kreislauf (11), in welchem hintereinander der Reaktor (26), wenigstens eine Dampfturbine (12), der Kondensator (13), die Kondensatpumpe (14), der Speisewasserbehälter (25) und die Speisewasserpumpe (15) angeordnet sind, wobei Mittel (19) zur Abseparierung von Wasserstoff aus im Wasser-Dampf-Kreislauf (11) vorhandenen, nichtkondensierbaren Gasen vorgesehen sind, die Abseparierungsmittel (19) einen ersten Eingang (20a) für das zu separierende Gasgemisch aufweisen, welcher erste Eingang (20a) mit dem Kondensator (13) in Verbindung steht, und die Abseparierungsmittel (19) einen ersten Ausgang (21 b) für den abseparierten Wasserstoff aufweisen, welcher erste Ausgang (21b) mit dem Wasser-Dampf-Kreislauf (11) hinter der Kondensatpumpe (14) in Verbindung steht, **dadurch gekennzeichnet, dass** im Kondensator (13) Mittel zur Aufkonzentration der nichtkondensierbaren Gase vorgesehen sind.

8. Vorrichtung nach Anspruch 7, **dadurch gekennzeichnet, dass** Mittel zur Aufkonzentration der nichtkondensierbaren Gase in Form von Luftkühlern (16) vorliegen.

9. Vorrichtung nach Anspruch 7 oder 8, **dadurch gekennzeichnet, dass** die Abseparierungsmittel ein mit selektiv wasserstoffdurchlässigen Membranen bestücktes Separationsmodul (19) umfassen.

10. Vorrichtung nach Anspruch 9, **dadurch gekennzeichnet, dass** zwischen dem ersten Eingang (20a) des Separationsmoduls (19) und dem Kondensator (13) erste Saugeinrichtungen, insbesondere in Form von Dampfstrahlsaugem (17, 18), angeordnet sind.

11. Vorrichtung nach Anspruch 9 oder 10, **dadurch gekennzeichnet, dass** zwischen dem ersten Ausgang (21 b) des Separationsmoduls (19) und dem Wasser-Dampf-Kreislauf (11) eine zweite Saugeinrichtung, insbesondere in Form eines Dampfstrahlsaugers (22), angeordnet ist.

12. Vorrichtung nach Anspruch 11, **dadurch gekennzeichnet, dass** zwischen der zweiten Saugeinrichtung (22) und dem Wasser-Dampf-Kreislauf (11) ein Verdichter (24) angeordnet ist.

13. Vorrichtung nach Anspruch 11 oder 12, **dadurch gekennzeichnet, dass** zwischen der zweiten Saugeinrichtung (22) und dem Verdichter (24) ein Zwischenkondensator (23) angeordnet ist.

## Claims

1. Method for operating a nuclear power plant (10), in which in a water/steam cycle (11) water is evaporated in a reactor (26), the steam which is generated is expanded in one or more steam turbines (12), the expanded steam is condensed in a subsequent condenser (13), the condensate is pumped into a feedwater tank (25) by means of a condensate pump (14), and feedwater is pumped out of the feedwater tank (25) back into the reactor (26) by means of a feedwater pump (15) in order to generate steam, hydrogen being added to the feedwater in order to reduce stress corrosion cracking, at least some of the hydrogen added to the feedwater being obtained from non-condensable gases generated in the reactor (26), the non-condensable gases being sucked out at the condenser (13), hydrogen being separated out of the non-condensable gases which have been sucked out and the hydrogen which has been separated off being compressed and the compressed hydrogen being injected into the water/steam cycle (11) downstream of the condensate pump (14), **characterized in that** the non-condensable gases are concentrated in the condenser (13) before being sucked out.

2. Method according to Claim 1, **characterized in that** the non-condensable gases are passed through a separation module (19) equipped with membranes that are selectively permeable to hydrogen, and **in that** the hydrogen is obtained from the permeate of the separation module (19).

3. Method according to Claim 2, **characterized in that** the non-condensable gases are compressed before they enter the separation module (19).

4. Method according to Claim 2 or 3, **characterized in that** the permeate, which predominantly comprises hydrogen and steam, is sucked out of the separation module (19) and raised to a higher pressure, **in that** steam is separated out of the permeate after the pressure has been increased, and **in that** the hydrogen which remains is then fed to the compression.

5. Method according to Claim 4, **characterized in that** the sucking-out of the permeate takes place with the addition of purge steam.

6. Method according to one of Claims 2 to 5, **characterized in that** the retentate which comes out of the separation module (19) is treated.

7. Apparatus for carrying out the method according to Claim 1, having the water/steam cycle (11), in which the reactor (26), at least one steam turbine (12), the condenser (13), the condensate pump (14), the feedwater tank (25) and the feedwater pump (15) are arranged in series, means (19) for separating hydrogen out of non-condensable gases that are present in the water/steam cycle (11) being provided, the separation means (19) having a first inlet (20a) for the gas mixture which is to be separated, which first inlet (20a) is connected to the condenser (13), and the separation means (19) having a first outlet (21b) for the hydrogen which has been separated off, which first output (21b) is connected to the water/steam cycle (11) downstream of the condensate pump (14), **characterized in that** means for concentrating the non-condensable gases are provided in the condenser (13).

8. Apparatus according to Claim 7, **characterized in that** means for concentrating the non-condensable gases are present in the form of air coolers (16).

9. Apparatus according to Claim 7 or 8, **characterized in that** the separation means comprise a separation module (19) which is equipped with membranes that are selectively permeable to hydrogen.

10. Apparatus according to Claim 9, **characterized in that** first suction devices, in particular in the form of steam jet suction means (17, 18), are arranged between the first inlet (20a) of the separation module (19) and the condenser (13).

11. Apparatus according to Claim 9 or 10,
**characterized in that** a second suction device, in particular in the form of a steam jet suction means (22), is arranged between the first outlet (21b) of the separation module (19) and the water/steam cycle (11).

12. Apparatus according to Claim 11, **characterized in that** a compressor (24) is arranged between the second suction device (22) and the water/steam cycle (11).

13. Apparatus according to Claim 11 or 12,
**characterized in that** an intermediate condenser (23) is arranged between the second suction device (22) and the compressor (24).

## Revendications

1. Procédé d'utilisation d'une centrale nucléaire (10) dans lequel de l'eau d'un circuit (11) d'eau-vapeur est évaporée dans un réacteur (26), la vapeur ainsi créée est détendue dans une ou plusieurs turbines à vapeur (12), la vapeur détendue est condensée dans un condenseur (13) aval, le condensat est pompé dans un récipient (25) d'eau d'alimentation au moyen d'une pompe (14) à condensat et l'eau d'alimentation est reprise dans le récipient (25) d'eau d'alimentation au moyen d'une pompe (15) à eau d'alimentation pour de nouveau créer de la vapeur dans le réacteur (26), de l'hydrogène étant ajouté à l'eau d'alimentation pour diminuer la corrosion par fissuration sous tension, au moins une partie de l'hydrogène ajouté à l'eau d'alimentation étant récupérée dans les gaz non condensables créés dans le réacteur (26), les gaz non condensables étant aspirés dans le condenseur (13), l'hydrogène étant séparé des gaz non condensables aspirés et l'hydrogène séparé étant comprimé, l'hydrogène comprimé étant injecté dans le circuit (11) d'eau-vapeur en aval de la pompe (14) à condensat, **caractérisé en ce que** les gaz non condensables sont concentrés dans le condenseur (13) avant l'aspiration.

2. Procédé selon la revendication 1, **caractérisé en ce que** les gaz non condensables sont passés dans un module de séparation (19) doté de membranes sélectivement perméables à l'hydrogène et **en ce que** l'hydrogène est récupéré dans le perméat du module de séparation (19).

3. Procédé selon la revendication 2, **caractérisé en ce que** les gaz non condensables sont comprimés avant de pénétrer dans le module de séparation (19).

4. Procédé selon les revendications 2 ou 3,
**caractérisé en ce que** le perméat principalement constitué d'hydrogène et de vapeur d'eau est aspiré dans le module de séparation (19) et est amené à une pression plus élevée, **en ce qu'**après l'augmentation de la pression, l'hydrogène est séparé du perméat et **en ce que** l'hydrogène résiduel est alors amené à la compression.

5. Procédé selon la revendication 4, **caractérisé en ce que** l'aspiration du perméat s'effectue par injection de vapeur d'entraînement.

6. Procédé selon l'une des revendications 2 à 5, **caractérisé en ce que** le rétentat qui sort du module de séparation (19) est traité.

7. Dispositif en vue de la mise en oeuvre du procédé selon la revendication 1, avec le circuit (11) d'eau-vapeur dans lequel le réacteur (26), au moins une turbine à vapeur (12), le condenseur (13), la pompe à condensat (14), le récipient (25) d'eau d'alimentation et la pompe (15) d'eau d'alimentation sont disposés successivement, des moyens (19) de séparation de l'hydrogène des gaz non condensables présents dans le circuit (11) d'eau-vapeur étant prévus, les moyens (19) de séparation présentant une première entrée (20a) pour le mélange de gaz séparés, laquelle première entrée (20a) communique avec le condenseur (13), les moyens de séparation (19) présentant une première sortie (21b) pour l'hydrogène séparé, laquelle première sortie (21b) communique avec le circuit (11) d'eau-vapeur en aval de la pompe (14) à condensat, **caractérisé en ce que** des moyens de concentration des gaz non condensables sont prévus dans le condenseur (13).

8. Dispositif selon la revendication 7, **caractérisé en ce que** les moyens de concentration des gaz non condensables présentent la forme de refroidisseurs à air (16).

9. Dispositif selon les revendications 7 ou 8,
**caractérisé en ce que** les moyens de séparation comprennent un module de séparation (19) doté de membranes sélectivement perméables à l'hydrogène.

10. Dispositif selon la revendication 9, **caractérisé en ce que** des premiers dispositifs d'aspiration présentent en particulier la forme d'aspirateurs (17, 18) à jet de vapeur sont disposés entre la première entrée (20a) du module de séparation (19) et le condenseur (13).

11. Dispositif selon les revendications 9 ou 10,
**caractérisé en ce qu'**un deuxième dispositif d'aspiration qui présente en particulier la forme d'un aspirateur (22) à jet de vapeur est disposé entre la première sortie (21b) du module de séparation (19) et le circuit (11) d'eau-vapeur.

12. Dispositif selon la revendication 11, **caractérisé en ce qu'**un compresseur (24) est disposé entre le deuxième dispositif d'aspiration (22) et le circuit (11) d'eau-vapeur.

13. Dispositif selon les revendications 11 ou 12,
**caractérisé en ce qu'**un condenseur intermédiaire (23) est disposé entre le deuxième dispositif d'aspiration (22) et le compresseur (24).
